# EUROPÄISCHE PATENTSCHRIFT

(11) **EP 3 312 615 B1**
(45) Veröffentlichungstag und Bekanntmachung des Hinweises auf die Patenterteilung: **08.05.2019**
(21) Anmeldenummer: 17020482.0
(22) Anmeldetag: 19.10.2017
(51) Int. Cl.: G01P 15/08, G01P 15/09, G01L 1/16

(54) **ELEKTRONISCHE MESSSCHALTUNG FÜR SCHWINGUNGSMESSUNGEN MIT EINEM PIEZOELEKTRISCHEN BESCHLEUNIGUNGSSENSOR**
ELECTRONIC MEASURING DEVICE FOR VIBRATION MEASURING WITH A PIEZOELECTRIC ACCELERATION SENSOR
CIRCUIT DE MESURE ÉLECTRONIQUE POUR MESURES DE VIBRATION POURVU D'UN CAPTEUR D'ACCÉLÉRATION PIÉZOÉLECTRIQUE

(30) Priorität: 20.10.2016 DE 102016012553
(43) Veröffentlichungstag der Anmeldung: 25.04.2018
(73) Patentinhaber: Brüel & Kjaer Vibro GmbH, 64293 Darmstadt (DE)
(72) Erfinder: Grän, Thomas, 64289 Darmstadt (DE)
(74) Vertreter: Völger, Karl Wolfgang

(56) Entgegenhaltungen:
- CH-A1- 706 309
- DE-A1- 4 115 672
- US-A- 3 130 329

## Beschreibung

Die Erfindung betrifft eine elektronische Messschaltung für Schwingungsmessungen mit einem piezoelektrischen Beschleunigungssensor nach dem Oberbegriff des Patentanspruchs 1.

Bei der Überwachung von rotierenden Maschinen oder deren Teilen wird häufig eine Schwingungsmessung bzw. eine Körperschallmessung ausgenutzt, um eine Aussage über den Maschinenzustand zu treffen. Dazu wird mit Hilfe von Schwingungs- oder Beschleunigungsaufnehmern das Schwingverhalten der Maschine oder das der zu untersuchenden Maschinenteile analog erfasst und anschließend mit Hilfe einer digitalen Signalverarbeitung ausgewertet. Zur Erfassung mechanischer Schwingungen werden als Schwingungsaufnehmer dabei häufig piezoelektrische Sensoren eingesetzt, deren Ladung in einer nachfolgenden Ladungs-Spannungs-Wandlerschaltung in eine elektrische Spannung umgewandelt wird. Derartige Ladungs-Spannungs-Wandler werden häufig auch als Ladungsverstärker bezeichnet.

Ein derartiger Ladungsverstärker an einem piezoelektrischen Beschleunigungsaufnehmer ist aus der DE 41 15 672 A1 bekannt. Dabei ist dem piezoelektrischen Beschleunigungsaufnehmer ein integrierender Ladungsverstärker nachgeschaltet, der einen Operationsverstärker enthält. Der piezoelektrische Beschleunigungssensor ist dabei mit dem invertierenden und dem nichtinvertierenden Eingang des Operationsverstärkers verbunden, wobei der nichtinvertierende Eingang auf Massepotential gelegt ist. Zur Integration des Sensorsignals ist der Ausgang des Operationsverstärkers über eine Parallelschaltung aus einer Kapazität und einem Widerstand auf den invertierenden Eingang des Operationsverstärkers zurückgekoppelt. Dadurch wird das Ladungssignal des Beschleunigungssensors in eine proportionale Spannung am Ausgang des Operationsverstärkers umgewandelt, die zwischen dem Ausgang und dem Massepotential anliegt. Zur Energieversorgung und zum Betrieb des Ladungsverstärkers ist neben dem zweiadrigen Ausgang allerdings noch eine zusätzliche einadrige Speiseleitung notwendig. Bei längeren Leitungen zwischen dem Ladungsverstärker und der Auswerteschaltung ist allerdings eine dreiadrige Messleitung häufig zu aufwändig und aus Kostengründen nicht wünschenswert.

Aus der CH 706 309 A1 ist eine elektronische Messschaltung mit einem in einer Straße eingebauten WIM (weight-in-motion) Sensor bekannt, dessen Speisung und Signalübertragung gleichzeitig über eine zweiadrige Messleitung erfolgt. Der zur dynamischen Gewichtsmessung eingebaute WIM-Sensor ist dazu als piezoelektrischer Sensor ausgebildet, der als Messsignal eine elektrische Ladung erzeugt, die dem Gewicht des überfahrenden Fahrzeugs proportional ist. Dem piezoelektrischen Sensor ist dabei ein Ladungsverstärker nachgeschaltet, der das Ladungssignal in ein Spannungssignal umwandelt und auch als Ladungs-Spannungswandler bezeichnet werden kann. Dabei enthält der Ladungs-Spannungswandler einen Operationsverstärker (IC1), dessen nichtinvertierender Eingang (+Pol) über einen Kopplungskondensator (Cc) mit dem einen Ausgang des Sensors verbunden ist. Hingegen ist der andere Ausgang des Sensors mit einem Masseeingang (GND) des Ladungsverstärkers verbunden, der im Ladungsverstärker über eine Zenerdiode (D) mit dem invertierenden Eingang (-Pol) des Operationsverstärkers verschaltet ist. Zur Gegenkopplung des Ladungsverstärkers ist am Ausgang des Operationsverstärkers (IC1) ein Kondensator (Cg) angeordnet, der wiederum mit dem nichtinvertierenden Eingang (+Pol) des Operationsverstärkers (IC1) verbunden ist. Nach dem Ausgang des Operationsverstärkers (IC1) folgt ein NPN-Transistor (T1), der einen Impedanzwandler darstellt, das Ausgangssignal des Operationsverstärkers (IC1) invertiert und zusätzlich verstärkt. Nach dem Impedanzwandler ist zwischen dem Emitter und dem Kollektor des Transistors (T1) ein zweiadriges Kabel angeschlossen, über welches das Messsignal an eine externe Auswerteschaltung (Coupler) übertragen wird. Zur Speisung des Ladungsverstärkers und des Impedanzwandlers ist in der externen Auswerteschaltung gleichzeitig eine Stromquelle vorgesehen, die einen Speisegleichstrom über die zweiadrige Leitung des Kabels zum Ladungsverstärker und zum Impedanzwandler überträgt. Die dynamische Messsignalspannung am Kollektor von Transistor T1 wird gleichzeitig auch zur Speisung der Versorgungsspannungsanschlüsse von Operationsverstärker IC1 verwendet. Da die Ausgangsspannung von IC1 immer nahe an der unteren Betriebsspannung liegt, kann dies zu nichtlinearen Verzerrungen führen. Gleichzeitig bewirkt die hohe Verstärkung des NPN-Transistors (T1) eine frequenzabhängige Phasendrehung, so dass die Messschaltung bei längeren Anschlussleitungen bzw. Kabeln mit kapazitiver Belastung zu einem instabilen Messsignal am Ausgang führen kann.

Der Erfindung liegt deshalb die Aufgabe zugrunde, eine elektronische Messschaltung der vorbekannten Art so zu verbessern, dass die Messgenauigkeit und die Stabilität erhöht werden, und dies unter einem möglichst geringen Schaltungsaufwand.

Gemäß des Hauptanspruchs der die Priorität begründenden Anmeldung wird diese Aufgabe gelöst durch eine elektronische Messschaltung mit einem piezoelektrischen Beschleunigungssensor (1) und einem nachfolgenden Ladungs-Spannungswandler (2), der eine zweiadrige Ausgangsleitung (3, 4) aufweist, die zur Speisung oder Versorgung mit einer Gleichstromquelle (5) verbunden ist, wobei der Ladungs-Spanungswandler (2) einen Operationsverstärker (6) enthält, der über einen invertierenden Eingangsanschluss (8) und einen nichtinvertierenden Eingangsanschluss (7) verfügt, die mit den Sensorausgängen (9,18) verbunden sind, wobei der Ausgangsanschluss (10) des Operationsverstärkers (6) über eine Parallelschaltung eines Rückkopplungskondensators (11) und eines Widerstandsnetzwerks bestehend aus Rückkopplungswiderstand (12) und dem Spannungsteiler bestehend aus einem dritten Widerstand (25) und einem zweiten Widerstand (24) mit dem invertierenden Eingangsanschluss (8) des Operationsverstärkers (6) verbunden ist, dadurch gekennzeichnet, dass der nichtinvertierende Eingangsanschluss (7) über ein erstes Spannungsbegrenzungselement (13) mit der ersten Ausgangsleitung (3) sowie über einen ersten Widerstand (23) mit der Ausgangsleitung (4) und der Ausgangsanschluss (10) des Operationsverstärkers (6) zusätzlich mit einem zweiten Spannungsbegrenzungselement (14) und mit der zweiten Ausgangsleitung (4) verbunden ist.

Die vorstehend genannte Aufgabe wird in der vorliegenden Anmeldung durch die im Patentanspruch 1 angegebene Erfindung gelöst.

Die vorliegende Erfindung betrifft eine elektronische Messschaltung mit einem piezoelektrischen Beschleunigungssensor (1) und einem nachfolgenden Ladungs-Spannungswandler (2), der eine zweiadrige Ausgangsleitung (3, 4) aufweist, die zur Speisung oder Versorgung mit einer Gleichstromquelle (5) verbunden ist,
wobei der Ladungs-Spanungswandler (2) einen Operationsverstärker (6) enthält, der über einen invertierenden Eingangsanschluss (8) und einen nichtinvertierenden Eingangsanschluss (7) verfügt, die mit dem ersten Sensorausgang (9) und einem ersten Spannungsbegrenzungselement (13) verbunden sind,
wobei der Ausgangsanschluss (10) des Operationsverstärkers (6) über ein zweites Spannungsbegrenzungselement (14) mit der zweiten Ausgangsleitung (4) verbunden ist, welche wiederum mit dem positiven Versorgungsanschluss (15) des Operationsverstärkers (6) und über eine Parallelschaltung eines Rückkopplungskondensators (11) und eines Widerstandsnetzwerks bestehend aus Rückkopplungswiderstand (12) und dem Spannungsteiler bestehend aus einem zweiten Widerstand (24) und einem dritten Widerstand (25) mit dem invertierenden Eingangsanschluss (8) des Operationsverstärkers (6) verbunden ist
dadurch gekennzeichnet, dass der nichtinvertierende Eingangsanschluss (7) über ein erstes Spannungsbegrenzungselement (13) mit der ersten Ausgangsleitung (3) sowie über einen ersten Widerstand (23) mit der zweiten Ausgangsleitung (4) verbunden ist, wobei der zweite Sensorausgang (18) mit dem negativen Versorgungsanschluss (16) des Operationsverstärkers (6) sowie der ersten Ausgangsleitung (3) verbunden ist.

Die Erfindung hat den Vorteil, dass durch ein erstes Spannungsbegrenzungselement (13) vor dem nichtinvertierenden Eingang (7) des Operationsverstärkers (6) an diesen eine konstante Eingangsruhespannung angelegt wird, durch die auf einfache Weise eine genaue Einhaltung der Ausgangsruhespannung in Verbindung mit dem aus den zweiten und dritten Widerständen (24, 25) R2 und R3 gebildeten Spannungsteiler erreicht wird.

Die Erfindung hat weiterhin durch den Einsatz eines zweiten Spannungsbegrenzungselementes (14) am Ausgang des Operationsverstärkers (6) den Vorteil, dass dadurch eine vorgegebene Spannungsdifferenz zwischen der Ausgangsspannung des Operationsverstärkers (6) und dessen Versorgungsspannung gewährleistet wird. Durch die stets verringerte Ausgangsspannung gegenüber der Versorgungsspannung wird erreicht, dass der Operationsverstärker (6) auch verhältnismäßig große Messsignalausschläge verzerrungsfrei und linear umsetzt bzw. verstärkt, wodurch die Messgenauigkeit der Messschaltung erhöht wird. Die Neigung der Messschaltung zur Oszillation ist gering, da dem Operationsverstärker keine weitere phasendrehende Verstärkerstufe nachgeschaltet ist.

Eine besondere Ausführung der vorliegenden Erfindung ist dadurch gekennzeichnet, dass das zweite Spannungsbegrenzungselement (14) als Zenerdioden ausgebildet ist, dessen Durchbruchspannung eine vorgegebene Differenz zur Versorgungs- oder Speisespannung des Operationsverstärkers (6) aufweist, wobei diese gegenüber der Versorgungsspannung um einen vorgegebenen Spannungswert verringert ist.

Bei einer besonderen Ausführung der Erfindung mit einer zusätzlichen Stromverstärkerstufe im Anschluss nach der zweiten Zenerdiode (zweites Spannungsbegrenzungselement (14)) hat den Vorteil, dass diese für längere Ausgangsleitungen zwischen dem Ladungsverstärker und der externen Stromquelle vorteilhaft ist. Die geringe Spannungsverstärkung eines PNP-Transistors (22) Q1 in Kollektorschaltung von weniger als 1 verursacht nur eine geringe frequenzabhängige Phasendrehung des Messsignals, was zur Stabilität der Schaltung auch bei langen Messleitungen beiträgt.

Nach einer Weiterbildung der elektronischen Messschaltung sind der piezoelektrische Beschleunigungssensor (1) und der Ladungsverstärker (2) in einem gemeinsamen Gehäuseteil integriert angeordnet und über eine zweiadrige Ausgangsleitung (3,4) mit einer externen Stromquelle (5) zur Speisung des Ladungsverstärkers (2) als Ladungs-Spannungswandler verbunden.

Ferner kann in einer Ausführungsform der Erfindung der Spannungsteiler bestehend aus dem zweiten Widerstand (24) und dem dritten Widerstand (25) in seinem Teilungsverhältnis so ausgebildet sein, dass dadurch in Verbindung mit der ersten Zenerdiode (als erstes Spannungsbegrenzungselement (13)) eine definierte Ausgangsruhespannung als Gleichspannung vorgesehen ist.

Eine andere Weiterbildung der elektronischen Messschaltung sieht vor, dass nach dem Operationsverstärkerausgang (10) eine Stromverstärkerstufe mit mindestens einem PNP-Ausgangstransistor (22) und dem zweiten Spannungsbegrenzungselement (14) geschaltet ist.

Eine weitere besondere Ausführung ist dadurch gekennzeichnet, dass nach dem Operationsverstärkerausgang (10) im Anschluss ein vierter Widerstand (26) und ein fünfter Widerstand (27) und das Spannungsbegrenzungselement (14) zur Strombegrenzung für den PNP-Ausgangstransistor (22) und den Operationsverstärker (6) vorgesehen sind.

Diese weitere besondere Ausführung der Erfindung, welche erweitert ist um die vierten und fünften Widerstände (26, 27) R4 und R5, bewirkt vorteilhaferweise eine Strombegrenzung von Operationsverstärker (6) und PNP-Transistor (22) Q1 bei fehlerhaftem Anschalten der Messschaltung. Dies bewirkt einen Schutz des Ladungsverstärkers vor Beschädigungen oder Zerstörung.

Nach einer Weiterbildung der erfindungsgemäßen elektronischen Messschaltung ist in einer Ader (4) der zweiadrigen Ausgangsleitung (3, 4) vor der Ausgangsklemme (20) ein sechster Widerstand (28) vorgesehen. Lange Kabel an den Ausgangsklemmen (20, 21) der Messschaltung stellen eine kapazitive Blindlast dar, welche unter Umständen eine Schwingneigung der Verstärkeranordnung hervorrufen kann. Mit dieser Weiterbildung, d.h. dem Vorsehen des sechsten Widerstands (28) R6, wird die kapazitive Blindlast des Kabels entkoppelt und damit für eine geringere Neigung der Verstärkerschaltung zur Oszillation gesorgt.

In einer bevorzugten Ausführungsform der Erfindung ist parallel zu dem PNP-Ausgangstransistor (22) und dem zweiten Spannungsbegrenzungselement (14) ein zweiter Kondensator (30) geschaltet, der zusammen mit dem sechsten Widerstand (28) einen Tiefpass bildet. Eingekoppelte hochfrequente Störungen können über die zweiadrige Ausgangsleitung (3, 4) der Messschaltung die Funktion der Verstärkerschaltung empfindlich stören. Der durch den zweiten Kondensator (30) C2 und den sechsten Widerstand (28) R6 gebildete Tiefpass dämpft diese hochfrequenten Störungen auf der zweiadrige Ausgangsleitung (3, 4) und hält damit Störungen von der Verstärkerschaltung fern.

Der vierte Widerstand (26) R4 bildet zusammen mit der Eingangskapazität des PNP-Ausgangstransistors (22) Q1 einen Tiefpass, der eine Phasendrehung im Rückkopplungspfad der Schaltung bewirkt. Diese Phasendrehung kann bei einer ungünstigen Dimensionierung der Schaltung zu einer Schwingneigung des Verstärkers führen. Um dieser Phasendrehung entgegenzuwirken und dadurch die Stabilität der Verstärkeranordnung zu verbessern, hat es sich als vorteilhaft erwiesen, wenn parallel zum vierten Widerstand (26) ein erster Kondensator (29) C1 geschaltet ist.

Die Erfindung wird anhand eines Ausführungsbeispiels, das in den Figuren dargestellt ist, näher erläutert. Weitere Ziele, Merkmale, Vorteile und Anwendungsmöglichkeiten ergeben sich aus dieser nachfolgenden Beschreibung. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigen:
- Fig.1:: eine elektronische Messschaltung mit einem piezoelektrischen Sensor 1, einem Ladungsverstärker 2 und einer externen Stromquelle 5;
- Fig. 2:: eine elektronische Messschaltung mit einem piezoelektrischen Sensor 1, einem Ladungsverstärker 2, einem Ausgangstransistor (Q1) 22 und einer externen Stromquelle 5,
- Fig. 3:: eine elektronische Messschaltung mit einem piezoelektrischen Sensor 1, einem Ladungsverstärker 2, einem Ausgangstransistor (Q1) 22, Widerständen zur Strombegrenzung und einer externen Stromquelle 5 und
- Fig. 4: eine elektronische Messschaltung mit einem piezoelektrischen Sensor 1, einem Ladungsverstärker 2, einem Ausgangstransistor (Q1) 22, insgesamt sieben Widerständen (Rf, R1, R2, R3, R4, R5, R6) 12, 23, 24, 25, 26, 27, 28 zur Strombegrenzung, einer externen Stromquelle 5 sowie einem ersten Kondensator (C1) 29, einem zweiten Kondensator (C2) 30 und einem Rückkopplungskondensator (Cf) 11.

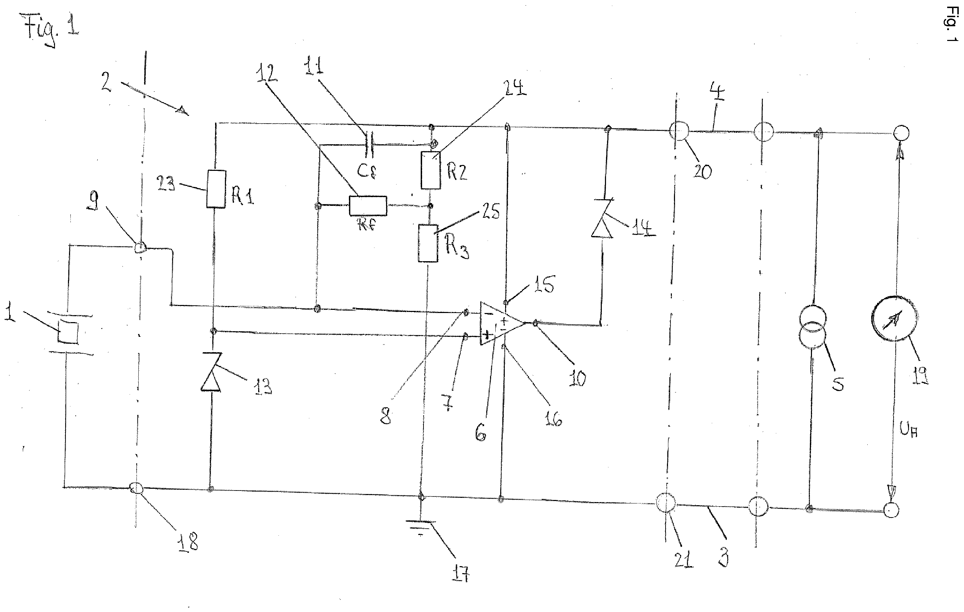

In Figur 1 ist eine elektronische Messschaltung dargestellt, die einen piezoelektrischen Beschleunigungs- bzw. Schwingungssensor 1, einen Ladungsverstärker 2 mit einem Operationsverstärker 6 und zur Speisung auf einer Zweidrahtausgangsleitung 3, 4 eine externe Gleichstromquelle 5 enthält.

Zur Vibrationsüberwachung rotierender Maschinen enthält die elektronische Messschaltung einen piezoelektrischen Sensor 1, der die Schwingung bzw. Beschleunigung an einer derartigen Maschine oder deren Teilen erfasst und wie ein Schwingungssensor oder Beschleunigungssensor arbeitet. Der piezoelektrische Sensor 1 ist an seinen ersten und zweiten Sensorausgängen 9, 18 über eine zweiadrige Verbindung mit dem Ladungsverstärker 2 verbunden, wobei ein zweiter Sensorausgang 18 auf einen Massepol 17 geschaltet ist. Der erste Sensorausgang 9 ist direkt mit dem invertierenden Eingang 8 des Operationsverstärkers 6 verbunden. Am nichtinvertierenden Eingang 7 des Operationsverstärkers 6 ist vorzugsweise eine erste Zenerdiode (als erstes Spannungsbegrenzungselement 13) geschaltet, die andererseits auf den Massepol 17 gelegt ist, wobei diese vorzugsweise eine Durchbruchspannung von 2 V aufweist. Ein erster Widerstand (R1) 23, welcher mit der ersten Zenerdiode (als erstes Spannungsbegrenzungselement 13) und der Ausgangsklemme 20 verbunden ist, gewährleistet einen ausreichenden Betriebsstrom für die erste Zenerdiode als erstes Spannungsbegrenzungselement 13. Dabei gewährleistet diese erste Zenerdiode (als erstes Spannungsbegrenzungselement 13) eine entsprechend gleichbleibende Spannungsreferenz, deren Wert mit dem Kehrwert des Spannungsteiler Verhältnisses eines zweiten Widerstands (R2) 24 und eines dritten Widerstands (R3) 25 multipliziert die Ausgangsruhespannung an Ausgangsklemme 20 als Biasspannung festlegt.

Am Operationsverstärker-Ausgang 10 ist im Rückkopplungszweig zum invertierenden Eingangsanschluss 8 des Operationsverstärkers 6 eine Parallelschaltung aus einem Rückkopplungskondensator (Cf) 11 und einem Rückkopplungswiderstandsnetzwerk bestehend aus einem Rückkopplungswiderstand (Rf) 12, einem zweiten Widerstand (R2) 24 und einem dritten Widerstand (R3) 25 angeordnet. Dabei wird durch den Rückkopplungskondensator (Cf) 11 der Ladungsverstärkungsfaktor der Verstärkung bestimmt und durch das Rückkopplungswiderstandsnetzwerk eine stabile Ausgangsruhespannung an der Ausgangsklemme 20 bewirkt. Gleichzeitig wird durch den Rückkopplungskondensator (Cf) 11 und dem Rückkopplungswiderstandsnetzwerk auch die untere Grenzfrequenz des Messsignals festgelegt.

Da zur Spannungsversorgung des Ladungsverstärkers 2 keine separate dritte Speiseleitung vorgesehen werden soll, wird die Speiseenergie über die zweiadrige Ausgangsleitung 3, 4 von einer externen Versorgungsquelle herangeführt. Dazu ist eine externe Stromquelle 5 als Gleichstromquelle vorgesehen, die zwischen den beiden Ausgangsleitungen 3, 4 geschaltet ist und einen konstanten Speisegleichstrom zum Ladungsverstärker 2 heranführt. Dabei wird der Minuspol der Gleichstromquelle auf den Massepol 17 geschaltet, der gleichzeitig auch am negativen Versorgungsanschluss 16 des Operationsverstärkers 6 anliegt. Gleichzeitig liegt der +Pol des Speisegleichstroms sowohl an der zweiten Zenerdiode am zweiten Spannungsbegrenzungselement 14, als auch am positiven Versorgungsanschluss 15 des Operationsverstärkers 6 an. Damit speist sich der Ladungsverstärker 2 aus dem Ruhegleichstrom der Stromquelle 5 und der dynamischen Ausgangsspannung, die dem Ruhestrom überlagert ist.

Da der Betrieb eines Operationsverstärkers 6 in der Regel nur möglich ist, wenn sich die Signalausgangsspannung innerhalb der Speisespannungsgrenzen befindet, um ein stabiles Messsignal am Operationsverstärkerausgang 10 zu bilden, benötigen gebräuchliche Operationsverstärker 6 zur stabilen Verstärkung einige Volt zwischen dem Operationsverstärkerausgang 10 und dem Versorgungsanschluss 15. Um diese Spannungsdifferenz zwischen dem Operationsverstärkerausgang 10 und seinem positiven Versorgungsanschluss 15 einzuhalten, ist zwischen diesen Anschlüssen die zweite Zenerdiode als zweites Spannungsbegrenzungselement 14 geschaltet, die eine Spannungsdifferenz von vorzugsweise 2 V herstellt Dadurch wird auch bei verhältnismäßig hohen dynamischen Messsignalen ein linearer Betrieb des Ladungsverstärkers 2 erzielt. Dieses zweite Spannungsbegrenzungselement 14 kann alternativ auch durch mehrere in Durchlassrichtung gepolte Dioden oder einen entsprechend bemessenen Widerstand ausgebildet werden. Am Ende der Signalausgangsleitung 3, 4 kann die Ausgangsspannung (UA) in einer externen Auswerteschaltung 19 weiterverarbeitet werden.

Zur Umwandlung der durch den Sensor erfassten Ladungssignale in proportionale Spannungssignale arbeitet die elektronische Messschaltung wie folgt.

Im Messbetrieb erfasst der piezoelektrische Sensor 1 mittels einer seismischen Masse dessen Beschleunigung und erzeugt mit dieser eine entsprechende elektrische Ladung. Diese wird im nachfolgenden Ladungsverstärker 2 in eine proportionale elektrische Spannung umgewandelt. Mit derartigen piezoelektrischen Sensoren 1 können aber auch andere physikalische Größen wie beispielsweise Drücke, Kräfte und mechanische Spannungen erfasst werden.

Der in der Messschaltung vorgesehene Beschleunigungssensor 1 wird vorzugsweise für die Vibrationsüberwachung von rotierenden Maschinen eingesetzt. Da bei diesen Vibrationsüberwachungen die Sensoren 1 direkt an den zu überwachenden Maschinen angebracht werden müssen und die Auswertung und Anzeige der Messwerte häufig in größeren Entfernungen von oft 100 m oder mehr erfolgen, dürfen die kapazitiven, induktiven oder ohmschen Einflüsse der Übertragungsleitungen nicht vernachlässigt werden. Deshalb sind bei der dargestellten Messschaltung der Beschleunigungssensor 1 und der Ladungsverstärker 2 in einem gemeinsamen oder benachbarten Gehäuseteil integriert angeordnet. Deshalb sind die beiden zweiadrigen Sensorausgänge 9, 18 direkt mit den beiden Eingängen des Ladungsverstärkers 2 über kurze Anschlusswege miteinander verbunden. Dabei wandelt der Ladungsverstärker 2 die vom piezoelektrischen Sensor 1 bei einer erfassten Beschleunigung erzeugten Ladung diese in eine dazu proportionale Spannung um. Dazu liegt das Ladungssignal zwischen dem invertierenden Eingangsanschluss 8 des Operationsverstärkers 6 und dem Massepotential 17.

Zur Umwandlung und Verstärkung der Ladungssignale wird dabei die Verstärkerelektronik des Ladungsverstärkers 2 durch einen eingeprägten Gleichstrom mit Energie versorgt. Dieser Gleichstrom, der auch als Biasstrom bezeichnet wird, beträgt vorteilhafterweise 2 mA bis 10 mA. An den Ausgangsklemmen 20, 21 liegt dabei eine Ruhespannung, auch Biasspannung genannt, von vorzugsweise 12 V Gleichspannung an. Dieser statischen Biasspannung ist das dynamische Beschleunigungssignal bei einer erfassten Beschleunigung oder Schwingung überlagert. Das Widerstandsnetzwerk bestehend aus dem Rückkopplungswiderstand (Rf) 12, dem zweiten Widerstand (R2) 24 und einem Spannungsteiler aus einem dritten Widerstand (R3) 25, definiert dabei in Verbindung mit der Durchbruchspannung von ca. 2 V der ersten Zenerdiode als erstes Spannungsbegrenzungselement 13 eine definierte Ausgangsruhespannung von ca. 12 V.

Weiterhin ist es für eine hohe Messgenauigkeit auch notwendig, dass verhältnismäßig große Messsignale linear verstärkt werden. Dies ist bei einem herkömmlichen Operationsverstärker 6 aber nur möglich, wenn die Ausgangsspannung am Operationsverstärkerausgang 10 um eine Spannungsdifferenz unterhalb der Speisespannung von z.B. 12 V liegt, wie sie an dem positiven Versorgungsanschluss 15 des Operationsverstärkers 6 angeschaltet ist. Um diese Spannungsdifferenz zwischen dem Operationsverstärkerausgang 10 und seinem positiven Versorgungsspannungsanschluss 15 herzustellen, ist deshalb zwischen diesen beiden Anschlüssen die zweite Zenerdiode (als zweites Spannungsbegrenzungselement 14) geschaltet, die eine Durchbruchsspannung von beispielsweise 2 V aufweist. Dadurch wird die Ausgangsruhespannung am Anschluss 10 des Operationsverstärkers 6 gegenüber dem Massepotential 17 auf 10 V gesetzt. Eine große Betriebsspannungsunterdrückung des Operationsverstärkers 6 unterstützt die lineare Messsignalverarbeitung und trägt gleichzeitig zum stabilen Betrieb der Ladungsverstärkerschaltung 2 bei.

Der Rückkopplungskondensator (Cf) 11 und das Widerstandsnetzwerk bestehend aus dem Rückkopplungswiderstand (Rf) 12 und dem Spannungsteiler mit dem zweiten Widerstand (R2) 24 und dem dritten Widerstand (R3) 25 legen den linearen Verstärkungsfaktor und die untere Grenzfrequenz des verstärkten und gewandelten Ladungssignals an den beiden Ausgangsklemmen 20, 21 der Ladungsverstärkerschaltung 2 fest. Dieses Messspannungssignal wird über die zweiadrige Ausgangsleitung 3, 4 zu der externen Auswerteschaltung 19 übertragen, in der gleichzeitig auch die Stromquelle 5 angeordnet ist. Auch wenn hier Messsignale mit bis zu 30 kHz erfasst und übertragen werden, sind auch bei längeren Kabelstrecken von einigen hundert Metern keine besonderen Leitungsausführungen notwendig, da die verstärkten Messspannungssignale auch durch Leitungskapazitäten und Leitungswiderstände sowie der geringen Ausgangsimpedanz des Ladungsverstärkers 2 nur wenig verzerrt werden. Insofern ist in der nachgeschalteten Auswerteschaltung 19 ein analoges Messsignal erfassbar, das dort meist digitalisiert und entsprechend weiterverarbeitbar ist.

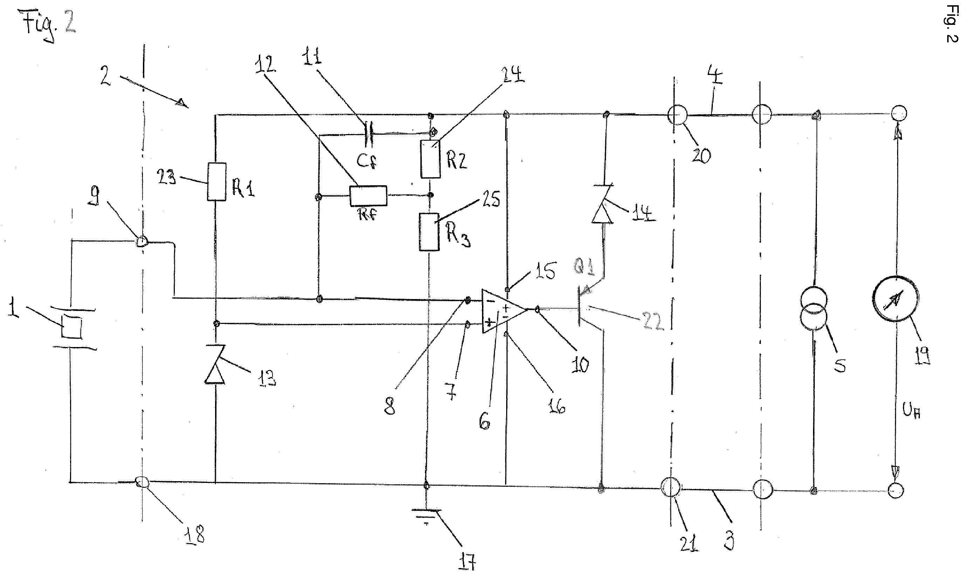

In Figur 2 ist eine elektronische Messschaltung mit einem piezoelektrischen Sensor dargestellt, der nach dem Ladungsverstärker 2 noch einen zusätzlichen Ausgangstransistor (Q1) 22 vor der externen Stromquelle 5 aufweist. Dabei unterscheidet sich die Messschaltung nach Figur 2 nur durch den zusätzlichen Ausgangstransistor (Q1) 22 von der Messschaltung nach Figur 1. Dabei ist der Ausgangstransistor (Q1) 22 dem Ladungsverstärker 2 nachgeschaltet und als PNP-Transistor ausgeführt, wobei die Basis mit dem Ausgang 10 des Operationsverstärkers 6, der Emitter mit der Anode der zweiten Zenerdiode (als zweites Spannungsbegrenzungselement 14) und der Kollektor mit dem Massepol 17 verbunden ist. Durch den Ausgangstransistor (Q1) 22 wird nach dem Operationsverstärkerausgang 10 eine Stromverstärkung erzielt, die insbesondere bei längeren Ausgangsleitungen 3, 4 vorteilhaft ist. So ist der Operationsverstärkerausgang 10 des Ladungsverstärkers 2 auf einen Ausgangsstrom von wenigen mA begrenzt, der durch den Ausgangstransistor (Q1) 22 auf einen Ausgangsstrom von über 100mA verstärkt werden kann. Im Übrigen ist die Funktion der Messschaltung nach Fig.2 identisch mit der Funktion der Messschaltung nach Figur 1.

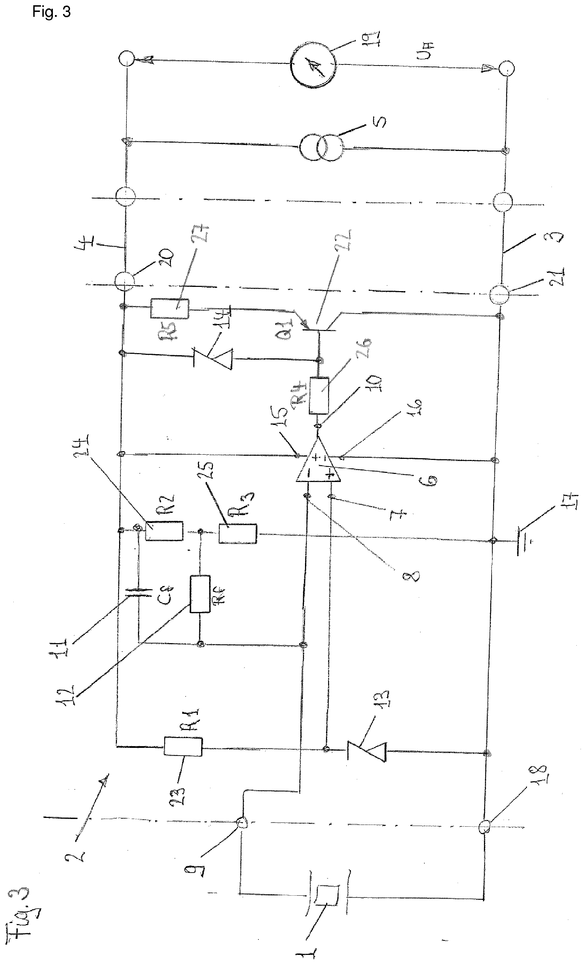

In Figur 3 ist eine elektronische Messschaltung mit einem piezoelektrischen Sensor dargestellt, welche zusätzlich zu der Schaltung in Figur 2 noch zwei weitere Widerstände als ein vierter Widerstand (R4) 26 und ein fünfter Widerstand (R5) 27 enthält. Die Anode des zweiten Spannungsbegrenzungselements 14 ist in diesem Fall verbunden mit der Basis des Ausgangstransistors (Q1) 22. Die beiden Widerstände 26, 27 begrenzen zusammen mit der zweiten Zenerdiode (als zweites Spannungsbegrenzungselement 14) den maximalen Ausgangsstrom des Ausgangstransistors 22. Dies schützt den Transistor 22 bzw. den Operationsverstärker 6 vor Beschädigung, sofern die externe Stromquelle 5 fehlerhafterweise mal als Spannungsquelle geschaltet worden ist. Im Übrigen ist die Funktion der Messschaltung nach Figur3 identisch mit der Funktion der Messschaltung nach Figur 2.

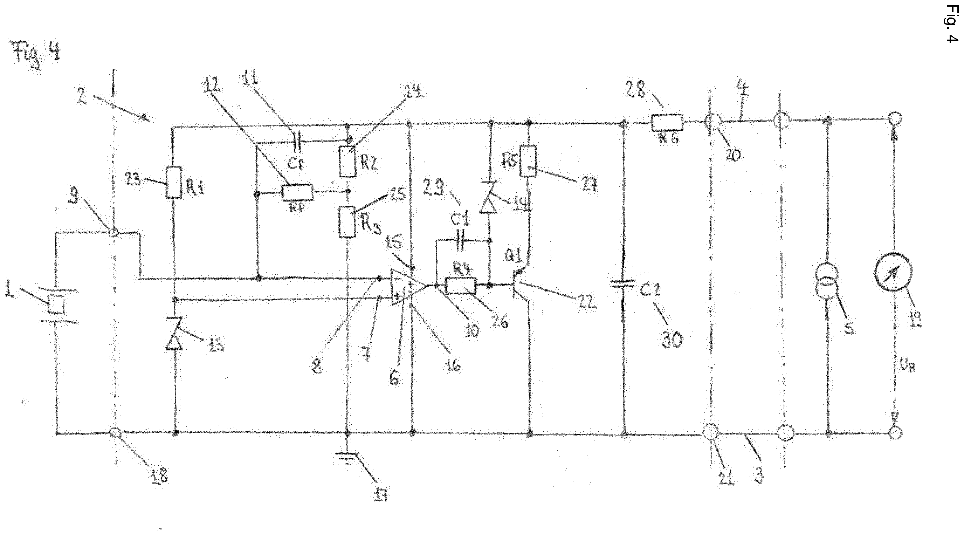

In Figur 4 ist eine elektronische Messschaltung nach einer weiteren bevorzugten Ausführungsform dargestellt, welche zusätzlich zu den in den Figuren 1, 2 und 3 gezeigten Schaltungen einen sechsten Widerstand (R6) 28 sowie einen ersten Kondensator (C1) 29 und einen zweiten Kondensator (C2) 30 aufweist.

Da lange Kabel an den Ausgangsklemmen 20, 21 der erfindungsgemäßen Messschaltung eine kapazitive Blindlast darstellen, welche unter Umständen eine Schwingneigung der Verstärkeranordnung hervorrufen kann, entkoppelt der sechste Widerstand (R6) 28 die kapazitive Blindlast des Kabels und sorgt damit für eine geringere Neigung der Verstärkerschaltung zur Oszillation.

Der zweite Kondensator (C2) 30 bildet zusammen mit dem sechsten Widerstand (R6) 28 einen Tiefpass, der hochfrequenten Störungen, die über die zweiadrige Ausgangsleitung 3,4 der Messschaltung eingekoppelt die Funktion der Verstärkerschaltung empfindlich stören, auf der zweiadrige Ausgangsleitung 3, 4 dämpft und damit Störungen von der Verstärkerschaltung fernhält.

Der vierte Widerstand (R4) 26 bildet zusammen mit der Eingangskapazität des PNP-Ausgangstransistors (Q1) 22 einen Tiefpass, der eine Phasendrehung im Rückkopplungspfad der Schaltung bewirkt. Diese Phasendrehung kann bei einer ungünstigen Dimensionierung der Schaltung zu einer Schwingneigung des Verstärkers führen. Um dieser Phasendrehung entgegenzuwirken und dadurch die Stabilität der Verstärkeranordnung zu verbessern, ist parallel zum vierten Widerstand (R4) 26 ein erster Kondensator (C1) 29 geschaltet.

### Bezugszeichenliste

- 1: piezoelektrischer Beschleunigungssensor
- 2: Ladungs-Spannungswandler
- 3, 4: zweiadrige Ausgangsleitung
- 5: Gleichstromquelle
- 6: Operationsverstärker
- 7: nichtinvertierender Eingangsanschluss
- 8: invertierender Eingangsanschluss
- 9: erster Sensorausgang
- 10: Ausgangsanschluss
- 11: Rückkopplungskondensator Cf
- 12: Rückkopplungswiderstand Rf
- 13: erstes Spannungsbegrenzungselement
- 14: zweites Spannungsbegrenzungselement
- 15: positiver Versorgungsanschluss
- 16: negativer Versorgungsanschluss
- 17: Massepotential
- 18: zweiter Sensorausgang
- 19: externe Auswerteschaltung
- 20: Ausgangsklemme
- 21: Ausgangsklemme
- 22: PNP-Ausgangstransistor Q1
- 23: erster Widerstand R1
- 24: zweiter Widerstand R2
- 25: dritter Widerstand R3
- 26: vierter Widerstand R4
- 27: fünfter Widerstand R5
- 28: sechster Widerstand R6
- 29: erster Kondensator C1
- 30: zweiter Kondensator C2

## Patentansprüche

1. Elektronische Messschaltung mit einem piezoelektrischen Beschleunigungssensor (1) und einem nachfolgenden Ladungs-Spannungswandler (2), der eine zweiadrige Ausgangsleitung (3, 4) aufweist, die zur Speisung oder Versorgung mit einer Gleichstromquelle (5) verbunden ist,
wobei der Ladungs-Spanungswandler (2) einen Operationsverstärker (6) enthält, der über einen invertierenden Eingangsanschluss (8) und einen nichtinvertierenden Eingangsanschluss (7) verfügt, die mit dem ersten Sensorausgang (9) und einem ersten Spannungsbegrenzungselement (13) verbunden sind,
wobei der Ausgangsanschluss (10) des Operationsverstärkers (6) über ein zweites Spannungsbegrenzungselement (14) mit der zweiten Ausgangsleitung (4) verbunden ist, welche wiederum mit dem positiven Versorgungsanschluss (15) des Operationsverstärkers (6) und über eine Parallelschaltung eines Rückkopplungskondensators (11) und eines Widerstandsnetzwerks bestehend aus Rückkopplungswiderstand (12) und dem Spannungsteiler bestehend aus einem zweiten Widerstand (24) und einem dritten Widerstand (25) mit dem invertierenden Eingangsanschluss (8) des Operationsverstärkers (6) verbunden ist,
**dadurch gekennzeichnet, dass** der nichtinvertierende Eingangsanschluss (7) über ein erstes Spannungsbegrenzungselement (13) mit der ersten Ausgangsleitung (3) sowie über einen ersten Widerstand (23) mit der zweiten Ausgangsleitung (4) verbunden ist, wobei der zweite Sensorausgang (18) mit dem negativen Versorgungsanschluss (16) des Operationsverstärkers (6) sowie der ersten Ausgangsleitung (3) verbunden ist.

2. Elektronische Messschaltung nach Anspruch 1, **dadurch gekennzeichnet, dass** das zweite Spannungsbegrenzungselement (14) als Zenerdioden ausgebildet ist, dessen Durchbruchspannung eine vorgegebene Differenz zur Versorgungs- oder Speisespannung des Operationsverstärkers (6) aufweist, wobei diese gegenüber der Versorgungsspannung um einen vorgegebenen Spannungswert verringert ist.

3. Elektronische Messschaltung nach Anspruch 1, **dadurch gekennzeichnet, dass** der piezoelektrische Beschleunigungssensor (1) und der Ladungsverstärker (2) in einem gemeinsamen Gehäuseteil integriert angeordnet sind und über eine zweiadrige Ausgangsleitung (3, 4) mit einer externen Stromquelle (5) zur Speisung des Ladungsverstärkers (2) als Ladungs-Spannungswandler verbunden sind.

4. Elektronische Messschaltung nach einem der Ansprüche 1 bis 3, **dadurch gekennzeichnet, dass** der Spannungsteiler bestehend aus dem zweiten Widerstand (24) und dem dritten Widerstand (25) in seinem Teilungsverhältnis so ausgebildet ist, dass dadurch in Verbindung mit dem ersten Spannungsbegrenzungselement (13) eine definierte Ausgangsruhespannung als Gleichspannung vorgesehen ist.

5. Elektronische Messschaltung nach einem der Ansprüche 1 bis 4, **dadurch gekennzeichnet, dass** nach dem Operationsverstärkerausgang (10) eine Stromverstärkerstufe mit mindestens einem PNP-Ausgangstransistor (22) und dem zweiten Spannungsbegrenzungselement (14) geschaltet ist.

6. Elektronische Messschaltung nach Anspruch 5, **dadurch gekennzeichnet, dass** nach dem Operationsverstärkerausgang (10) im Anschluss ein vierter Widerstand (26) und ein fünfter Widerstand (27) und das Spannungsbegrenzungselement (14) zur Strombegrenzung für den PNP-Ausgangstransistor (22) und den Operationsverstärker (6) vorgesehen sind.

7. Elektronische Messschaltung nach einem der Ansprüche 1 bis 6, **dadurch gekennzeichnet, dass** in einer Ader (4) der zweiadrigen Ausgangsleitung (3, 4) vor der Ausgangsklemme (20) ein sechster Widerstand (28) vorgesehen ist.

8. Elektronische Messschaltung nach Anspruch 7, wenn abhängig von Anspruch 5 oder 6, **dadurch gekennzeichnet, dass** parallel zu dem PNP-Ausgangstransistor (22) und dem zweiten Spannungsbegrenzungselement (14) ein zweiter Kondensator (30) geschaltet ist, der zusammen mit dem sechsten Widerstand (28) einen Tiefpass bildet.

9. Elektronische Messschaltung nach einem der Ansprüche 6 bis 8, **dadurch gekennzeichnet, dass** parallel zum vierten Widerstand (26) ein erster Kondensator (29) geschaltet ist.

## Claims

1. Electronic measuring circuit with a piezo-electric acceleration sensor (1) and a down-stream charge converter (2) with a two-core output line (3, 4) which is connected to a DC source (5) for feeding or supply,
the charge converter (2) composed of an operational amplifier (6) equipped with an inverting input connection (8) and a non-inverting input connection (7) which are connected to the first sensor output (9) and a first voltage limitation element (13), the output connection (10) of the operational amplifier (6) being connected via a second voltage limitation element (14) with the second output line (4), the latter being connected with the positive supply connection (15) of the operational amplifier (6) and with the inverting input connection (8) of the operational amplifier (6),via a connection in parallel of a feedback capacitor (11) and a resistor network composed of feedback resistor (12) and a voltage divider composed of a second resistor (24) and a third resistor (25),
**characterized in that** the non-inverting input connection (7) is connected with the first output line (3) via a first voltage limitation element (13) and with the second output line (4) via a first resistor (23), the second sensor output (18) being connected both with the negative supply connection (16) of the operational amplifier (6) and the first output line (3).

2. Electronic measuring circuit according to claim 1, **characterized in that** the second voltage limitation element (14) is designed in the form of Zener diodes, and its breakthrough voltage has a preset difference compared with the supply voltage or the input terminal voltage of the operational amplifier (6), while the input terminal voltage is reduced by the a preset voltage value when compare with the supply voltage.

3. Electronic measuring circuit according to claim 1, **characterized in that** the piezo-electric acceleration sensor (1) and the charge converter (2) are arranged in integrated form in a common housing and are connected via a two-core output line (3, 4) with an external power source (5) for feeding of the charge amplifier (2) as charge converter.

4. Electronic measuring circuit according to one of claims 1 to 3, **characterized in that** the division ratio of the voltage divider, composed of the second resistor (24) and the third resistor (25), is designed in such a way that a defined quiescent output voltage is provided as direct voltage, in connection with the first voltage limitation element (13).

5. Electronic measuring circuit according to one of claims 1 to 4, **characterized in that** a power amplifying circuit is connected downstream the operational amplifying output (10) with at least one PNP output transistor (22) and the second voltage limitation element (14).

6. Electronic measuring circuit according to claim 5, **characterized in that** a fourth resistor (26) and a fifth resistor (27) and the voltage limitation element (14) are provided downstream the operational amplifying output (10), for power limitation for the PNP output transistor (22) and the operational amplifier (6).

7. Electronic measuring circuit according to one of the claims 1 to 6, **characterized in that** a sixth resistor (28) is provided upstream the output terminal (20) in one core of the two-core output line (3, 4).

8. Electronic measuring circuit according to claim 7, if dependent on claim 5 and claim 6, **characterized in that** a second capacitor (30) is connected in parallel to the PNP output transistor (22) and the second voltage limitation element (14) which forms a low pass together with the sixth resistor (28).

9. Electronic measuring circuit according to one of the claims 6 to 8, **characterized in that** a first capacitor (29) is connected in parallel to the fourth resistor (26).

## Revendications

1. Circuit électronique de mesure doté d'un accéléromètre piézoélectrique (1) suivi d'un convertisseur charge/tension (2), lequel présente un câble de sortie à deux conducteurs (3, 4) relié à une source de courant continu (5) pour approvisionnement ou alimentation,
le convertisseur charge/tension (2) contenant un amplificateur opérationnel (6) qui dispose d'une borne d'entrée inverseuse (8) et d'une borne d'entrée non inverseuse (7) reliées à la première sortie de capteur (9) et à un premier élément limiteur de tension (13),
la borne de sortie (10) de l'amplificateur opérationnel (6) étant reliée par un deuxième élément limiteur de tension (14) au deuxième câble de sortie (4), lui-même relié à la borne positive d'alimentation (15) de l'amplificateur opérationnel (6) et, par un montage en parallèle d'un condensateur de réaction (11) et d'un réseau de résistances constitué d'une résistance de réaction (12) et du diviseur de tension, constitué d'une deuxième résistance (24) et d'une troisième résistance (25), à la borne d'entrée inverseuse (8) de l'amplificateur opérationnel (6),
**caractérisé en ce que** la borne d'entrée non inverseuse (7) est reliée par un premier élément limiteur de tension (13) au premier câble de sortie (3) ainsi que par une première résistance (23) au deuxième câble de sortie (4), la deuxième sortie de capteur (18) étant reliée à la borne négative d'alimentation (16) de l'amplificateur opérationnel (6) ainsi qu'au premier câble de sortie (3).

2. Circuit électronique de mesure selon la revendication 1, **caractérisé en ce que** le deuxième élément limiteur de tension (14) est conçu en tant que diode Zener dont la tension de claquage présente une différence donnée avec la tension d'approvisionnement ou d'alimentation de l'amplificateur opérationnel (6), ladite tension de claquage étant minorée d'une valeur de tension donnée par rapport à la tension d'alimentation.

3. Circuit électronique de mesure selon la revendication 1, **caractérisé en ce que** l'accéléromètre piézoélectrique (1) et l'amplificateur de charge (2) sont agencés intégrés dans un boîtier commun et sont reliés par un câble de sortie à deux conducteurs (3, 4) à une source de courant externe (5) pour alimenter l'amplificateur de charge (2) en tant que convertisseur charge/tension.

4. Circuit électronique de mesure selon l'une quelconque des revendications 1 à 3, **caractérisé en ce que** le diviseur de tension constitué de la deuxième résistance (24) et de la troisième résistance (25) est conçu dans son rapport de division de telle sorte qu'ainsi, en liaison avec le premier élément limiteur de tension (13), une tension de repos définie en sortie est prévue en tant que tension continue.

5. Circuit électronique de mesure selon l'une quelconque des revendications 1 à 4, **caractérisé en ce qu'**un étage amplificateur de courant doté d'au moins un transistor bipolaire PNP de sortie (22) et du deuxième élément limiteur de tension (14) est monté après la sortie de l'amplificateur opérationnel (10).

6. Circuit électronique de mesure selon la revendication 5, **caractérisé en ce qu'**une quatrième résistance (26), une cinquième résistance (27) et l'élément limiteur de tension (14) sont prévus, raccordés, après la sortie de l'amplificateur opérationnel (10) pour limiter le courant pour le transistor bipolaire PNP de sortie (22) et pour l'amplificateur opérationnel (6).

7. Circuit électronique de mesure selon l'une quelconque des revendications 1 à 6, **caractérisé en ce que** dans un conducteur (4) du câble de sortie à deux conducteurs (3, 4), une sixième résistance (28) est prévue avant la borne de sortie (20).

8. Circuit électronique de mesure selon la revendication 7, si dépendante de la revendication 5 ou 6, **caractérisé en ce qu'**un deuxième condensateur (30) est monté en parallèle au transistor bipolaire PNP de sortie (22) et au deuxième élément limiteur de tension (14), lequel condensateur forme un filtre passe-bas avec la sixième résistance (28).

9. Circuit électronique de mesure selon l'une quelconque des revendications 6 à 8, **caractérisé en ce qu'**un premier condensateur (29) est monté en parallèle à la quatrième résistance (26).
